(19)

**Europäisches Patentamt**

**European Patent Office**

**Office européen des brevets**

(11) **EP 4 597 420 A1**

(12) **EUROPEAN PATENT APPLICATION**

(43) Date of publication:
**06.08.2025 Bulletin 2025/32**

(21) Application number: **24155628.1**

(22) Date of filing: **02.02.2024**

(51) International Patent Classification (IPC):
***G06T 7/00*** *(2017.01)* ***G06T 7/62*** *(2017.01)*

(52) Cooperative Patent Classification (CPC):
**G06T 7/0016; G06T 7/62;** G06T 2207/10104;
G06T 2207/10108; G06T 2207/20084;
G06T 2207/30084

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Advanced Neural Nuclear Imaging S.à
r.l.-S
2557 Luxembourg (LU)**

(72) Inventors:
• **Hubaut, Marc-Antoine
  59500 Douai (FR)**
• **Duquesne, Quentin
  2560 Luxembourg (LU)**

(74) Representative: **Plasseraud IP
104 Rue de Richelieu
CS92104
75080 Paris Cedex 02 (FR)**

(54) **A METHOD FOR ESTIMATING THE CORTICAL TRANSIT TIME ON A DYNAMIC RENAL SCINTIGRAPHY**

(57) A method implemented by computer means for estimating the cortical transit time on a dynamic renal scintigraphy of at least one kidney of a patient, comprising the following steps:
(a) obtaining at least one time sequence comprising at least two images from said scintigraphy,

(b) classifying images of said at least one time sequence depending on a state of said kidney on the image, said state being before or after a cortical transit time of the kidney under consideration,
(c) estimating the cortical transit time of each kidney from said classified images.

[Fig. 1]

## Description

### Technical Field

This disclosure pertains to the field of dynamic renal scintigraphy.

### Background Art

A dynamic renal scintigraphy, also known as a renal nuclear scan, is a medical imaging technique used to assess the structure and function of the kidneys. It involves the use of a radioactive tracer that is injected into the patient's bloodstream. This tracer is taken up by the kidneys and allows healthcare providers to create images and gather functional information about how the kidneys are working.

It is known that cortical transit time (CTT), in the context of dynamic renal scintigraphy, is an important parameter because it provides information on the ability for a molecule (e.g. radioactive tracer) to go through renal parenchyma from blood flow to urine. For example, a longer transit time can be indicative of urinary tract obstruction.

Known tracers for renal scintigraphies comprise 99mTc-mercaptoacetyltriglycine (MAG3) or 99mTc-DTPA (DTPA). However, DTPA is commonly used, the MAG3 tracer making the estimation of the CTT too difficult for a specialist reader.

The measurement of cortical transit time is typically performed during a dynamic renal scintigraphy study by observing the impregnation of the tracer in the renal parenchyma and tracking when it first reaches the urinary cavities (or calyceal cavities).

However, it is also known that the specific values and interpretation of CTT can vary depending on the medical facility and the Condition of realization of (for example, the patient hydration, a protocol with or without diuretic, etc.) the renal scintigraphy test. It is typically evaluated by nuclear medicine specialists or radiologists, and the results are considered alongside other clinical information to make a comprehensive assessment of kidney function and health.

The current methods to quantitatively measure the CTT are not routinely implemented because of several difficulties. First, because it is difficult, for a specialist reader, to determine on the images of the dynamic renal scintigraphy when exactly the tracer first reaches the calyceal cavities.

Secondarily, mathematical methods with deconvolution suffer from a lack of precision on routine scans mainly due to low resolution of the images and a high sensitivity of these methods to perturbating factors (such as movement during acquisition).

Thus, the final evaluation of the CTT with known methods suffer from lack of reproducibility and precision.

## Summary

This disclosure improves the situation.

It is proposed a method implemented by computer means for estimating the cortical transit time on a dynamic renal scintigraphy of at least one kidney of a patient, comprising the following steps:

> (a) obtaining at least one time sequence comprising at least two images from said scintigraphy,
>
> (b) classifying images of said at least one time sequence depending on a state of said kidney on the image, said state being before or after a cortical transit time of the kidney under consideration,
>
> (c) estimating the cortical transit time of each kidney from said classified images.

The dynamic renal scintigraphy is a medical imaging technique used to assess functional parameters of the kidneys.

The primary function of the kidneys is to filter and cleanse the blood by removing waste products and excess substances, regulating electrolyte balance, controlling blood pressure, and producing hormones that influence red blood cell production and calcium metabolism. The kidneys play a crucial role in maintaining the body's overall homeostasis and health.

The dynamic renal scintigraphy involves the use of a radioactive tracer, which is injected into the bloodstream. This tracer is taken up by the kidneys and excreted into the urine, allowing for the evaluation of different functional parameters, such as relative renal function between each kidney or voiding of urinary cavities.

The scintigraphy may be realized with different tracers like 99mTc-mercaptoacetyltriglycine or 99mTc-DTPA.

The "dynamic" aspect of the procedure refers to the fact that multiple images or frames are acquired over a period of time, typically ranging from twenty minutes to half an hour. As the radioactive tracer circulates through the bloodstream and is filtered by the kidneys, a gamma camera or scintillation camera is used to capture images of the kidneys. These images are taken in real-time or at specific time intervals, making it a "dynamic" study.

These sequential images capture the movement of the radioactive tracer from blood compartments, showing how it is filtered and excreted. A time sequence thus refers to sequential images obtained from the dynamic renal scintigraphy.

The time sequence may comprise 120 to 180 images (around 1 image every 10 to 20 seconds).

The images may be obtained from real scintigraphies of physical kidneys.

As introduced before, the Cortical Transit Time (CTT) is an important parameter used in dynamic renal scintigraphy, particularly in the assessment of an impact of a urinary tract obstruction. CTT is used to evaluate the efficiency of the kidney to excrete a molecule in urinary cavities, which is an indicator of renal parenchymal suffering if delayed (and often the consequence of a urinary tract obstruction). The measurement of cortical transit time (CTT) in dynamic renal scintigraphy is typically determined through visual estimations by tracking the moment when a tracer activity appears in urinary cavities. With this information, the medical professionals can assess the time it takes for a molecule in blood to be filtered in this region and can evaluate kidney functions and identifying potential abnormalities in parenchymal uptake.

Measuring the CTT on a patient can be performed for one or both kidneys. Usually, it is the difference of CTT that can indicate potential abnormalities, whether it is a delay between both kidneys, or a difference with anterior data.

Step (a) may comprise the following sub-steps:

- (a.i) acquiring a first time sequence of at least two images from said scintigraphy, each image containing said at least one kidney,

- (a.ii) for each kidney on the images of said first time sequence, obtaining a second time sequence of at least two images in a manner that said second time sequence is respectively a sequence of cropped images of the kidney under consideration, from images of said first time sequence from said scintigraphy,

and wherein the step (b) may comprise classifying images of each second time sequence.

The first time sequence corresponds to the sequential images obtained from the scintigraphy. It can be all the scintigraphy images, images of a particular time of the scintigraphy, or a subsampling. Reducing the number of images can advantageously result in fastening the execution of the method.

For example, the first time sequence is a sampling sequence of images obtained from the scintigraphy at a frequency of 1 image every 20 seconds.

Advantageously, a second time sequence contains cropped images of the scintigraphy, centered around a unique kidney. Therefore, the cropped image contains only information about the kidney, which result in a better estimation of the CTT.

If the CTT must be estimated for both kidneys, two second time sequences will be obtained. Each second time sequence may be cropped on the corresponding unique kidney. Each image of each second time sequence may then be classified at step (b).

Step (a.ii) may comprise the following sub-steps:

- normalizing the first time sequence,

- calculating an average image of images of said first time sequence,

- realizing a 2D-convolution on said average image, to obtain a feature map,

- identifying on said feature map, for each kidney, a distinct area with a high intensity, corresponding to the position of the kidney under consideration,

- for each area, cropping the first time sequence images on the area, to obtain a second time sequence.

Normalizing the first time sequence may comprise normalizing (by rescaling) the intensity of pixels. For example, the lowest pixel intensity may be 0 on the new scale, the highest one may be 255 and other ones may be modified proportionally. It may also include any image pre-processing step to facilitate further image processing.

Calculating an average image of the images of the first time sequence can be done by combining the images to create a single image that represents the average or mean of the pixel values across the input images. This can advantageously help reduce noise, enhance details, and create a more stable representation of the scene.

A 2D-convolution refers to a mathematical operation used to process and analyze 2D data, such as images or 2D arrays, by applying a convolution kernel (also known as a filter or mask) to the input data. This operation involves sliding the kernel over the input data and computing the element-wise product and sum of the overlapping values.

A 2D convolution may be performed as follow: first, defining a 2D convolution kernel (also known as a filter or mask). The kernel is a small matrix that specifies the weights used for the convolution. It determines the nature of the filtering or transformation applied to the input image.

Second, sliding the kernel over the input image. At each position, performing an element-wise multiplication between the kernel and the portion of the input image it overlaps with. Then, sum up the results of these multiplications to get a single value, which becomes the corresponding pixel value in the output image.

Finally, repeating the operation for every position in the input image results in an output image which represents the transformed or filtered version of the original image. This output image is commonly known as a feature map.

For example, if the kernel is a matrix containing only values equal to 1, the feature map will be an output image that highlights the areas with the most high-intensity pixels on the input image and plays down the areas with a majority of low-intensity pixels.

On the images of the scintigraphy, the intensity of a pixel directly depends on the presence of the radioactive tracer. Therefore, performing such a 2D-convolution results in highlighting the areas where the radioactive tracer is concentrated, i.e., the kidneys.

Moreover, the kernel size may advantageously be chosen to be smaller than the kidney, so kidney is highlighted in its entirety.

The method may comprise, for each kidney, the identification of a distinct area with the highest intensity. The intensity of an area can be calculated as the sum of the intensity of the pixels composing said area. For both kidneys, the two areas may be distinct, so that each area corresponds to a different kidney.

Then, the method may comprise cropping the normalized first time sequence on each area to obtain a second time sequence. Thus, a second time sequence may comprise cropped images of a single kidney. For both kidneys, this step may result in two second time sequences, each one with images cropped on a different kidney.

The cropping may be performed by following a predefined window size, so that the second time sequences are directly normalized and exploitable.

However, the center of the area may not necessarily be the center of the kidney on the image. To remedy this, the method may comprise repositioning said area so that the cropping is actually centered on the corresponding kidney.

In the method, identifying a distinct area with a high intensity may comprise repositioning said area on the closest bean-like shape of said image.

This may be done with a neural network trained to recognize kidney (or bean-like shape) on an image.

Repositioning said area may comprise the following sub-steps:

- for each of plurality of diagonal lines, calculating the mean intensity of the pixels composing it, said diagonal lines having different angles in the area under consideration,

- calculating the center of pixels composing the diagonal line with the highest intensity mean and,

- centering said area on said center.

As the tracer produces high intensity pixels and is mainly positioned in the kidney, for all the possible diagonal lines in the area (of different angles), the one with the highest average intensity is the one that crosses the largest part of the kidney. Therefore, the center of this diagonal line is substantially the center of the kidney, and centering the area on the diagonal line center advantageously centers it on the kidney.

The center may be calculated only from diagonal line pixels with an intensity higher than a predefined threshold. This can advantageously reduce the impact of the remaining noise on the center position.

Said predefined threshold may be around 40%, preferably in the interval [30%, 50%] and may be ideally 41%, of the maximum intensity of the pixels composing the diagonal line with the highest intensity mean.

The threshold may be an absolute value of intensity, the intensity being normalized.

Because the shape of the kidney is globally known, in the method:

- said different angles may be in the interval [30° to 85°],

- diagonal lines for said area corresponding to the left kidney may be from bottom-left to up-right and diagonal lines for said area corresponding to the right kidney may be from up-left to bottom-right.

Reducing the number of diagonal lines fasten advantageously the execution of the method.

The diagonal line with the highest average intensity may be calculated by doing a linear regression maximizing the average intensity.

Once the second time sequence is normalized, the method may comprise classifying said normalized second time sequence. Said classification may be realized by a neural network.

The neural network may be trained on a dataset built from images sequences form multiple dynamic renal scintigraphies with a known CTT. The dataset may be built following the step (a.ii) described before for each scintigraphy, to obtain normalized second time sequences, and images of the latest may be labeled before or after CTT, based on the known CTT.

The neural network may be fully connected. The fully connected neural network is advantageously faster and more efficient than other types of neural network. Alternatively, the neural network may be a convolutional neural network comprising a convolutional layer that is able to realize directly the 2D-convolution and the repositioning.

In a fully connected neural network, also known as a multi-layer perceptron (MLP) or a feedforward neural network, each neuron or unit in one layer is connected to every neuron in the adjacent layer. This means that all neurons in one layer send their outputs to all neurons in the next layer, creating a dense network of connections.

Each neuron in the network performs a weighted sum of the inputs it receives and applies an activation function to the result. Common activation functions include the rectified linear unit (ReLU), sigmoid, or hyperbolic tangent (tanh). Activation functions introduce non-linearity and help the network capture complex relationships in the data.

The first hidden layer may contain as much neuron as there are pixels in the cropped image so a cropped image can be given as an input (for example after being flattened). The number of neurons may decrease from one hidden layer to another. The last layer may have 2 outputs corresponding to the image being before or after the CTT.

The two output neurons may correspond to the two classes (being before the CTT and being after the CTT) and may represent the probability for the image to be classified in the corresponding class. The image may be classified following the neuron with the greater value.

The method may also comprise a unique output neuron representing the probability for the image to belong to one of the classes: with a probability greater than 0.5, the image is classified in the said class, otherwise (i.e., probability less than 0.5) the image is classified in the other class.

The method may comprise the estimation of the CTT of each second time sequence, based on the classified images of each second time sequence.

The estimated CTT thus correspond to a real CTT of the real and physical kidney of the scintigraphy.

Step (c) may comprise the following sub-steps, for each second time sequence:

- (c.i) defining a transition time for each transition from images classified being before the cortical transit time to images classified being after the cortical transit time,

- (c.ii) estimating a cortical transit time as the unique transition time or the average of the first n transition times, n being a predefined natural positive integer.

As introduced, the CTT is often difficult to estimate. However, by studying an image of a second time sequence in details, it is often possible to estimate if the image describes a kidney before the CTT (the tracer has not yet reach urinary cavities) or a kidney after the CTT. Nevertheless, the transition from one state to another state may stay fuzzy during around one or two minutes.

A transition is identified when, among two successive images in the sequence, the initial image is classified as being before the CTT and the subsequent image is classified as being after the CTT (conversely, the scenario where the initial image is classified as being after the CTT and the subsequent image is classified as being before the CTT is not recognized as a transition). Given the inherent ambiguity in the precise moment of switch from before to after the CTT, multiple transitions can be observed.

The transition time refers to the timestamp at which the transition occurs, or in other words, the duration that has elapsed from the commencement of the sequence up to the point of transition (and should not be confused with the transition duration during which the state is indeterminate) The step (c.i) comprises defining all the transition times of a second time sequence. Based on these transition times, the CTT is estimated. If there is only one transition, the CTT is the transition time.

For multiple transitions, the CTT may be calculated by averaging the first n transition time. n may be lesser than 8, preferably lesser than 5 and more preferably equals to 2. Excluding the last transition times advantageously avoid taking into account possibly false negative (image classified being before the CTT while being effectively after the CTT).

The classification of the images and the estimation of the CTT may be performed in parallel. In other words, for each newly classified image, if this classification implies a transition, and if it is the $n^{th}$ transition, the CTT is estimated, and the method execution ends. Therefore, the last images are not classified, and the method is performed more quickly.

Moreover, the method of the invention may be realized with scintigraphies using different tracers than DTPA, such as MAG3. The neural network of the invention may also be trained with scintigraphies using DTPA and used on MAG3 scintigraphies.

In another aspect of the invention, it is proposed a computer-readable non-transient recording medium on which a software is registered to implement the method when the software is executed by a processor.

In another aspect of the invention, it is proposed a computer program comprising instructions for implementing the method, when this program is executed by a processor.

In another aspect of the invention, it is proposed a computer system comprising a memory with the instructions of a computer program according to the preceding claim and a processor accessing to said memory to read the instructions and execute the method.

**Brief Description of Drawings**

Other features, details and advantages will be shown in the following detailed description and on the figures, on which:

[Fig. 1] is a flow diagram of the method according to an embodiment.

[Fig. 2] is a pair segmented images of the area with a kidney, and the diagonal line with the highest intensity mean according to an embodiment.

[Fig. 3] is a representation of the neural network realizing the classification of second time sequences according to an embodiment.

[Fig. 4] is a representation of the classified images of a second time sequence according to an embodiment.

[Fig. 5] is a pair of graphs showing the loss (left graph) and the accuracy (right graph) for a training and a validation phase of a neural network according to an embodiment of the invention.

**Description of a preferable embodiment**

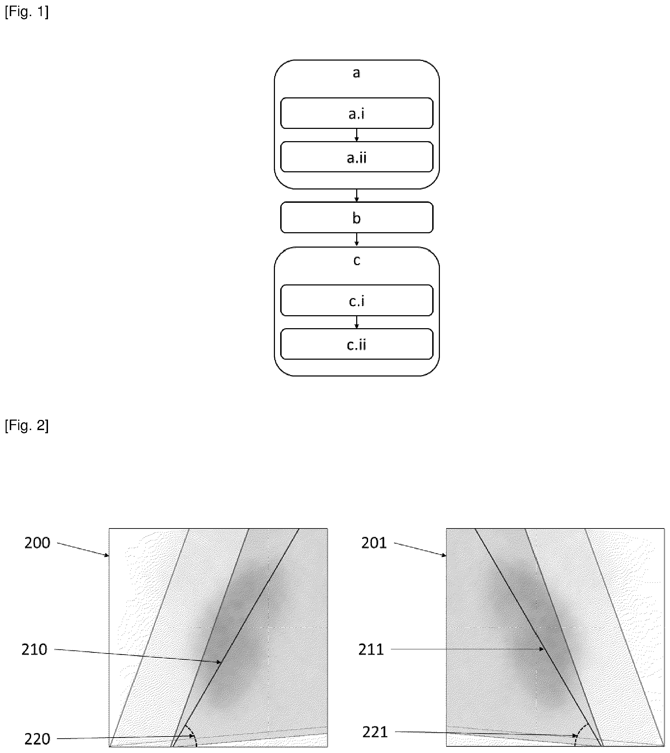

It is now referred to figure 1 which describes a flow diagram of the different steps of the method.

Firstly, a time sequence of images extracted from the scintigraphy is acquired corresponding to the step (a.i). On these images, two kidneys can be identified. This first time sequence has a time span of 30 minutes with an image every 10 seconds, for a total of 180 images.

Those images are proportionally normalized so the intensity of each pixel is between 0 and 255.

Then, the method comprises the identification of the kidneys. To do so, an average image is calculated, i.e., each pixel of the average image has an intensity corresponding to the mean intensity the pixel across the different images.

On the average image, a 2D-convolution is performed with a kernel of 25px by 25px of ones. Because of this kernel, smaller than the size of a kidney of the first time sequence, the resulting image has two areas with high intensity pixels. Those areas, being sized to be 42px by 42px, are extracted.

It is now referred to figure 2 which describes two segmented images of these extracted areas. The image 200 on the left corresponds to the left kidney and the image 201 on the right corresponds to the right kidney.

On each area, many diagonal lines with angles 220, 221 varying between 30° and 85° are listed, from bottom-left to up-right for the area corresponding to the left kidney and up-left to bottom-right for the area corresponding to the right kidney.

For each diagonal line, its mean intensity is computed by averaging the intensity of the pixels constituting the diagonal line, provided the pixel intensity exceeds 41% of the highest intensity observed among those pixels. Consequently, the diagonal line exhibiting the highest intensity is extracted.

As illustrated on the figure 2, the two areas 200, 201 are then respectively centered on the center of their corresponding diagonal lines 210, 211 with the highest intensity mean.

The first time sequence is then cropped (for each of its images) on each area to obtain (a.ii) two second or derived time sequences, the first derived time sequence comprising images of the first kidney and the second derived time sequence comprising images of the second kidney.

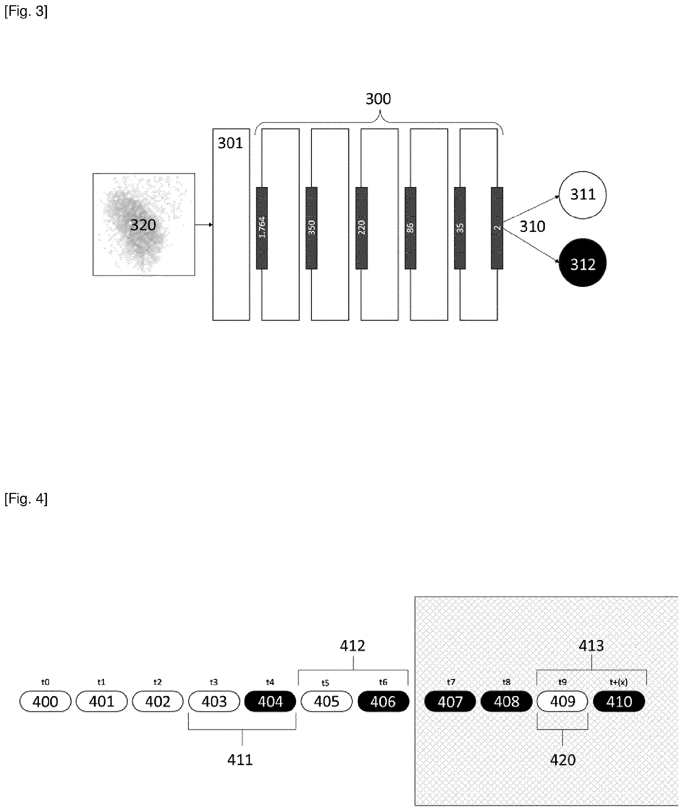

It is now referred to figure 3 which describes a neural network to classify the images of said second or derived time sequences.

The method comprises a step (b) of classification of each image of each second time sequence.

According to this embodiment, each image 320 is classified by the neural network. This neural network is a multi-layer perceptron (MLP), i.e., a fully connected feed-forward neural network.

The neural network comprises first a flatten layer 301 to transform a given image 320 to a one-dimensional array. Then, it comprises some hidden dense layers 300, fully connected one to the next one, with a ReLU activation function.

The last layer output is composed of two nodes on which is applied a SoftMax function 310, so the nodes value (between 0 and 1) corresponds to the probability for the image to describe a kidney before 311 or after 312 the cortical transit time (CTT). The image 320 is classified following the most probable one.

This neural network has been trained, prior to this classification, on a dataset of similar second time sequences obtained from many scintigraphies from which the CTT had been determined. In fact, from a scintigraphy database, many second time sequences have been determined using the same previous steps (a.i) and (a.ii), with the same normalization and the same convolution kernel, etc.

Then, these second time sequences have been used to train and adapt the weights of the nodes of the neural network. Hence, the nodes of the neural network have been weighted to correctly classify images of the second time sequences to be before 311 or after 312 the CTT.

In this embodiment, the dataset has been built with 706 images extracted from 13 scintigraphies provided with a known CTT, after excluding images with too much noise, too blurry (for example, because of patient movements during the scintigraphy), bad contrast, etc. 125 of them describe a kidney before a CTT and 581 of them after a CTT. The images have been normalized to 42x42 px.

To assess the learning performance of the neural network, a validation dataset with 20% of images is also built. The network has been trained during 40 epochs with a batch size of 32 images.

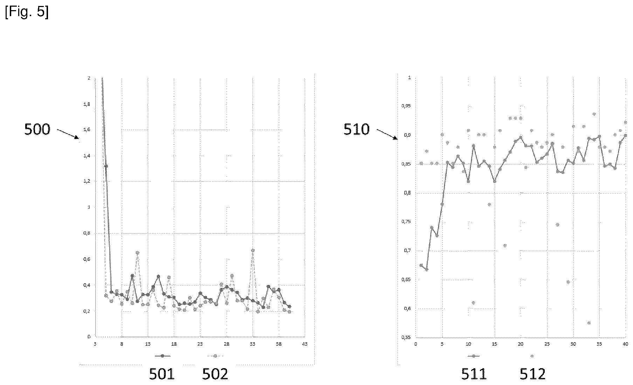

The figure 5 depicts on the left graph 500, the training loss 501 and validation loss 502, and on the right graph 510, the training accuracy 511 and the validation accuracy 512 over the epochs.

It is now referred to figured 4 which describes a second time sequence after being classified by the neural network. Some images (represented with light ovals) 400, 401, 402, 403, 405, 409 have been classified being before the CTT, while some other (represented with dark ovals) 404, 406, 407, 408 have been classified being after the CTT. The rest of the images 410 of the second time sequence have been classified being after the CTT.

The images are ordered by time. In other words, the image 400 has been taken at t0, the image 401 at t1=t0+T, the image 402 at t2=t1+T=t0+2T, with T=20s, etc.

The time sequence presents some transitions 411, 412, 413, when two consecutive images are respectively classified before and after CTT. The method comprises a step (c.i) defining the time when these transitions happen.

Then, the CTT is estimated in the step (c.ii) as the mean between the times of the two first transitions 411, 412 : $CTT = \frac{t4+t6}{2}$ .

The image 409 has been classified as being before the CTT while being timed after the estimated CTT, and therefore creating a transition after the estimated CTT. It is then considered that the classification of the image 409 is a potential false negative 420 that has been advantageously avoided.

**Claims**

1. A method implemented by computer means for estimating the cortical transit time on a dynamic renal scintigraphy of at least one kidney of a patient, comprising the following steps:

   (a) obtaining at least one time sequence comprising at least two images from said scintigraphy,
   (b) classifying images of said at least one time sequence depending on a state of said kidney on the image, said state being before or after a cortical transit time of the kidney under consideration,
   (c) estimating the cortical transit time of each kidney from said classified images.

2. The method according to the preceding claim wherein the step (a) comprises the following sub-steps:

   - (a.i) acquiring a first time sequence of at least two images from said scintigraphy, each image containing said at least one kidney,
   - (a.ii) for each kidney on the images of said first time sequence, obtaining a second time sequence of at least two images in a manner that said second time sequence is respectively a sequence of cropped images of the kidney under consideration, from images of said first time sequence from said scintigraphy,

   and wherein the step (b) comprising classifying images of each second time sequence.

3. The method according to the preceding claim wherein the step (c) comprises the following sub-steps, for each derived sequence:

   - (c.i) defining a transition time for each transition from images classified being before the cortical transit time to images classified being after the cortical transit time,
   - (c.ii) estimating a cortical transit time as the unique transition time or the average of the first n transition times, n being a predefined natural positive integer.

4. The method according to the claim 2 or 3 wherein the step (a.ii) comprises the following sub-steps:

   - normalizing the first time sequence
   - calculating an average image of images of said first time sequence,
   - realizing a 2D-convolution on said average image, to obtain a feature map,
   - identifying on said feature map, for each kidney, a distinct area with a high intensity, corresponding to the position of the kidney under consideration,
   - for each area, cropping the first time sequence images on the area, to obtain a second time sequence.

5. The method according to the preceding claim wherein identifying a distinct area with a high intensity comprises repositioning said area on the closest bean-like shape of said image.

6. The method according to the preceding claim wherein repositioning said area comprises the following sub-steps:

   - for each of plurality of diagonal lines, calculating the mean intensity of the pixels composing it, said diagonal lines having different angles in the area under consideration,
   - calculating the center of pixels composing the diagonal line with the highest intensity mean and,
   - centering said area on said center.

7. The method according to the preceding claim wherein said center is calculated only from diagonal line pixels with an intensity higher than a predefined threshold.

8. The method according to the preceding claim wherein said predefined threshold is around 40%, preferably in the interval [30%, 50%] and is ideally 41%, of the maximum intensity of the pixels composing the diagonal line with the highest intensity mean.

9. The method according to one of the claims 6 to 8 wherein:

   - said different angles are in the interval [30° to 85°],
   - diagonal lines for said area corresponding to the left kidney are from bottom-left to up-right and diagonal lines for said area corresponding to the right kidney are from up-left to bottom-right.

10. The method according to any preceding claim wherein classifying is realized by a neural network.

**EP 4 597 420 A1**

11. The method according to the preceding claim wherein the neural network is fully connected.

12. The method according to the claim 10 wherein the neural network is a convolutional neural network.

13. Computer-readable non-transient recording medium on which a software is registered to implement a method according to any of the preceding claims when the software is executed by a processor.

14. Computer program comprising instructions for implementing the method according to one of the claims 1 to 12, when this program is executed by a processor.

15. Computer system comprising a memory with the instructions of a computer program according to the preceding claim and a processor accessing to said memory to read the instructions and execute the method according to the claims 1 to 12.

[Fig. 1]

[Fig. 2]

[Fig. 3]

[Fig. 4]

[Fig. 5]

500

501    502

510

511    512

Europäisches
Patentamt

European
Patent Office

Office européen
des brevets

# EUROPEAN SEARCH REPORT

**Application Number**

EP 24 15 5628

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SANTOS WALLAS HENRIQUE DOS ET AL: "Automatic method for quantitative automatic evaluation in dynamic renal scintilography images", MULTIMEDIA TOOLS AND APPLICATIONS, KLUWER ACADEMIC PUBLISHERS, BOSTON, US, vol. 76, no. 18, 13 May 2017 (2017-05-13), pages 19291-19315, XP036297702, ISSN: 1380-7501, DOI: 10.1007/S11042-017-4715-9 [retrieved on 2017-05-13] | 1,2,4,5, 10-15 | INV. G06T7/00 G06T7/62 |
| A | * abstract; figures 1, 2, 3-5, 10 * * "1. Introduction"; page 2 - page 3 * * "2. Proposed methodology"; pages 4, 6, 8 * | 3,6-9 | |
| A | ARIBI YASSINE ET AL: "ARG: A semi-automatic system for ROI detection on Renal Scintigraphic images", 2014 14TH INTERNATIONAL CONFERENCE ON HYBRID INTELLIGENT SYSTEMS, IEEE, 14 December 2014 (2014-12-14), pages 303-308, XP032763881, DOI: 10.1109/HIS.2014.7086166 [retrieved on 2015-04-14] * the whole document * | 1-15 | |
| | | | **TECHNICAL FIELDS SEARCHED (IPC)** |
| | | | G06T |

-/--

The present search report has been drawn up for all claims

| Place of search | Date of completion of the search | Examiner |
|---|---|---|
| Munich | 8 August 2024 | Rodes Arnau, Isabel |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

**EP 4 597 420 A1**

Europäisches Patentamt
European Patent Office
Office européen des brevets

# EUROPEAN SEARCH REPORT

Application Number

EP 24 15 5628

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | OYARZUN-DOMEÑO ANNE ET AL: "A deep learning image analysis method for renal perfusion estimation in pseudo-continuous arterial spin labelling MRI", MAGNETIC RESONANCE IMAGING, ELSEVIER SCIENCE, TARRYTOWN, NY, US, vol. 104, 28 September 2023 (2023-09-28), pages 39-51, XP087434379, ISSN: 0730-725X, DOI: 10.1016/J.MRI.2023.09.007 [retrieved on 2023-09-28] * the whole document * | 1-15 | |
| A | BAR-SEVER ZVI ET AL: "Pediatric Nephro-Urology: Overview and Updates in Diuretic Renal Scans and Renal Cortical Scintigraphy", SEMINARS IN NUCLEAR MEDICINE, ELSEVIER, AMSTERDAM, NL, vol. 52, no. 4, 11 January 2022 (2022-01-11), pages 419-431, XP087092642, ISSN: 0001-2998, DOI: 10.1053/J.SEMNUCLMED.2021.12.002 [retrieved on 2022-01-11] * the whole document * | 1-15 | TECHNICAL FIELDS SEARCHED (IPC) |
| A | ALNAZER ISRAA ET AL: "Recent advances in medical image processing for the evaluation of chronic kidney disease", MEDICAL IMAGE ANALYSIS, OXFORD UNIVERSITY PRESS, OXOFRD, GB, vol. 69, 9 January 2021 (2021-01-09), XP086503847, ISSN: 1361-8415, DOI: 10.1016/J.MEDIA.2021.101960 [retrieved on 2021-01-09] * the whole document * | 1-15 | |

The present search report has been drawn up for all claims

| Place of search | Date of completion of the search | Examiner |
|---|---|---|
| Munich | 8 August 2024 | Rodes Arnau, Isabel |

EPO FORM 1503 03.82 (P04C01)